# EUROPÄISCHE PATENTSCHRIFT

(11) **EP 3 994 788 B1**
(45) Veröffentlichungstag und Bekanntmachung des Hinweises auf die Patenterteilung: **01.05.2024**
(21) Anmeldenummer: 20739553.4
(22) Anmeldetag: 17.06.2020
(51) Int. Cl.: H02K 5/08, H02K 7/00

(54) **ELEKTRISCHE MASCHINE**
ELECTRICAL MACHINE
MACHINE ÉLECTRIQUE

(30) Priorität: 04.07.2019 DE 102019118122
(43) Veröffentlichungstag der Anmeldung: 11.05.2022
(73) Patentinhaber: Schaeffler Technologies AG & Co. KG, 91074 Herzogenaurach (DE)
(72) Erfinder: MORGEN, Christian, 76532 Haueneberstein (DE); STEINERT, Volker, 76835 Gleisweiler (DE); KUHL, Dennis, 77815 Bühl (DE); NOLTE, Christian, 97437 Haßfurt (DE)
(86) Internationale Anmeldenummer: PCT/DE2020/100511
(87) Internationale Veröffentlichungsnummer: WO 2021/000989

(56) Entgegenhaltungen:
- DE-A1- 19 544 715
- DE-B- 1 066 659
- DE-U1- 20 306 902

## Beschreibung

Die Erfindung betrifft eine elektrische Maschine mit Stator und Rotor, welche gegen ein Gehäuse der elektrischen Maschine, allgemeiner gegen elektrisch leitende Komponenten der elektrischen Maschine, welche von außen berührt werden können, elektrisch isoliert sind.

Bei elektrischen Maschinen müssen die einzelnen Windungen der Leiter in Wicklungen an Stator und/oder Rotor elektrisch isoliert sein, etwa durch eine Lackierung der Leiter, um den für die Funktion der elektrischen Maschine erforderlichen Stromfluss zu gewährleisten; insbesondere gilt es, unerwünschte Stromflüsse, etwa durch Kurzschlüsse zwischen Windungen, zu vermeiden. Außer den Windungen selbst müssen hierzu auch deren Verschaltungen und Kontaktierungen isoliert sein. Diese Art der Isolierung wird entsprechend als Funktionsisolierung bezeichnet.

Unabhängig davon ist durch geeignete elektrische Isolierung auch sicherzustellen, dass, insbesondere im Fehlerfall, keine Gefährdung von Personen oder Anlagen besteht. Diese Art der Isolierung wird als Basisisolierung bezeichnet und dient also zum grundlegenden Schutz von unter gefährlichen Spannungen stehenden Teilen (vgl. auch DIN EN 60664). Sie wird bisher erreicht durch Isoliermaterial, etwa Papier, in Nuten für Wicklungen an Stator und/oder Rotor. Dies erfordert Materialaufwand, ist in der Montage aufwändig und nimmt auch Bauraum in Anspruch.

Die DE 10 66 659 B offenbart eine elektrische Maschine gemäß dem Oberbegriff des Anspruch 1. Weiter finden sich Rotoren mit elektrischer Isolation beispielsweise in der DE 203 06 902 U1 sowie der DE 195 44 715 A1.

Aufgabe der Erfindung ist es daher, eine elektrische Maschine anzugeben, in der die Basisisolierung mit weniger Aufwand erzielt wird.

Diese Aufgabe wird gelöst durch eine elektrische Maschine gemäß Anspruch 1.

Der Unteranspruch enthält eine vorteilhafte Ausgestaltung.

Die erfindungsgemäße elektrische Maschine hat einen Stator und ein Gehäuse. Erfindungsgemäß ist eine elektrisch isolierende Momentenabstützung vorgesehen, welche den Stator mit dem Gehäuse mechanisch verbindet. Eine Momentenabstützung ist hier eine mechanische Verbindung, welche ein Drehmoment zwischen Stator und Gehäuse überträgt, so dass letztlich bei Betrieb der elektrischen Maschine der Stator relativ zum Gehäuse und dessen Einbauumgebung ruht, mitunter abgesehen von Schwingungen. Da die Momentenabstützung elektrisch isolierend ausgestaltet ist, ist die erforderliche Basisisolierung zwischen Stator und Gehäuse erreicht. Dabei kann die Momentenabstützung hinsichtlich ihres elektrischen Widerstands selbstverständlich den Betriebsbedingungen und elektrischen Isolationserfordernissen der elektrischen Maschine entsprechend ausgestaltet werden, beispielsweise durch Auswahl eines adäquaten elektrisch isolierenden Materials für die Momentenabstützung. Die Momentenabstützung ist mit weniger Bauteilen und Montageschritten zu realisieren als das Einbringen von Isolationsmaterial in sämtliche Nuten des Stators; in den Nuten des Stators kann man sich auf die oben genannte Funktionsisolierung beschränken, etwa durch Verwendung eines lackierten Leiters für die Wicklungen. Außerdem benötigt die, aus mechanischen Gründen ohnehin erforderliche, Momentenabstützung keinen zusätzlichen Bauraum im Gehäuse und macht bei oben dargelegter erfindungsgemäßer Ausgestaltung Bauraum für Isolationsmaterial im Stator entbehrlich. Der Stator kann dabei wie bisher ganz oder teilweise aus Metall gefertigt sein, so dass keine weiteren konstruktiven Anpassungen erforderlich sind. Auch das Gehäuse kann aus Metall gefertigt sein. Gegenüber einem Gehäuse aus Kunststoff werden dabei Probleme hinsichtlich der elektromagnetischen Verträglichkeit vermieden. Gemäß der Erfindung wird aber, gerade auch bei einem Metallgehäuse, die erforderliche Basisisolierung erreicht. Weiter wird zusätzlich auch die Basisisolierung für einen Rotor der elektrischen Maschine erzielt. Genauer weist hier eine Welle eines Rotors der elektrischen Maschine einen Flansch aus elektrisch isolierendem Material auf. Über den Flansch kann die Welle, und damit der Rotor, in elektrisch isolierender Weise mechanisch an weitere Komponenten gekoppelt werden. Somit wird auch die Basisisolierung für den Rotor mit weniger Bauteilen und weniger Montageschritten erreicht, als zum Einbringen von Isolationsmaterial in sämtliche Nuten des Rotors erforderlich wären. Auch hier ist also der Aufwand gegenüber dem Stand der Technik verringert. In den Nuten des Rotors kann man sich auf die oben genannte Funktionsisolierung beschränken, etwa durch Verwendung eines lackierten Leiters für die Wicklungen. Erfindungsgemäß ist der Flansch der Welle mit einem Flansch einer Lagerwelle verbunden; die Lagerwelle wiederum ist in einem in dem Gehäuse angeordneten Lager aufgenommen. Somit kann letztlich der Rotor mechanisch am Gehäuse gelagert werden, ohne dass dabei entlang der Welle eine elektrisch leitende Verbindung zum Gehäuse besteht.

Somit wird die Basisisolierung mit weniger Aufwand als im Stand der Technik erzielt.

In einer Ausführungsform weist die Welle an gegenüberliegenden Enden jeweils einen Flansch aus elektrisch isolierendem Material auf und kann somit etwa beidseitig mechanisch in dem Gehäuse gelagert werden, ohne dass eine elektrisch leitende Verbindung zwischen dem Gehäuse und dem Rotor entlang der Welle besteht. Es ist auch denkbar, dass die Welle vollständig aus elektrisch isolierendem Material gefertigt ist und an einem oder an beiden Enden einen Flansch aufweist. Die Welle selbst kann aber auch aus einem Metall oder aus mehreren verschiedenen Materialien gefertigt sein. Entscheidend ist, dass der Flansch oder die Flansche an der Welle elektrisch isolierend sind.

Erfindungsgemäß weist eine elektrische Maschine einen Rotor und eine Welle des Rotors auf. Erfindungsgemäß ist an der Welle ein elektrisch isolierender Flansch vorgesehen, wie zuvor bereits beschrieben. In einem dem besseren Verständnis der Erfindung dienenden Beispiel, aber nicht zur Erfindung gehörend ist es anders als in den vorstehend beschriebenen Ausführungsformen nicht erforderlich, dass eine elektrisch isolierende Momentenabstützung zwischen einem Stator der elektrischen Maschine und einem Gehäuse der elektrischen Maschine vorgesehen ist. Die Basisisolierung für den Stator könnte dann etwa auf herkömmliche Weise erreicht werden. Auch in dieser Abwandlung ist es denkbar, dass der Flansch an der Welle mit einem Flansch einer Lagerwelle verbunden ist, und die Lagerwelle in einem in dem Gehäuse angeordneten Lager aufgenommen ist. Ebenso kann die Welle an gegenüberliegenden Enden jeweils einen Flansch aus elektrisch isolierendem Material aufweisen. Auch in dieser nicht zur Erfindung gehörenden Abwandlung der Erfindung kann die Welle vollständig aus elektrisch isolierendem Material gefertigt sein, und an einem Ende oder beidseitig einen Flansch aufweisen. Die Welle selbst kann aber auch aus einem Metall oder aus mehreren verschiedenen Materialien gefertigt sein. Entscheidend ist, dass der Flansch oder die Flansche an der Welle elektrisch isolierend sind.

Nachfolgend werden die Erfindung und ihre Vorteile an Hand der beigefügten schematischen Zeichnungen näher beschrieben.
- Figur 1: zeigt eine Ausführungsform einer erfindungsgemäßen elektrischen Maschine.
- Figur 2: zeigt eine weitere Ausführungsform einer erfindungsgemäßen elektrischen Maschine.

Die Zeichnungen zeigen zum Zwecke der Erläuterung lediglich Beispiele, wie eine erfindungsgemäße elektrische Maschine ausgestaltet sein kann. Die Zeichnungen sind nicht als Beschränkung der Erfindung auf die gezeigten Beispiele aufzufassen.

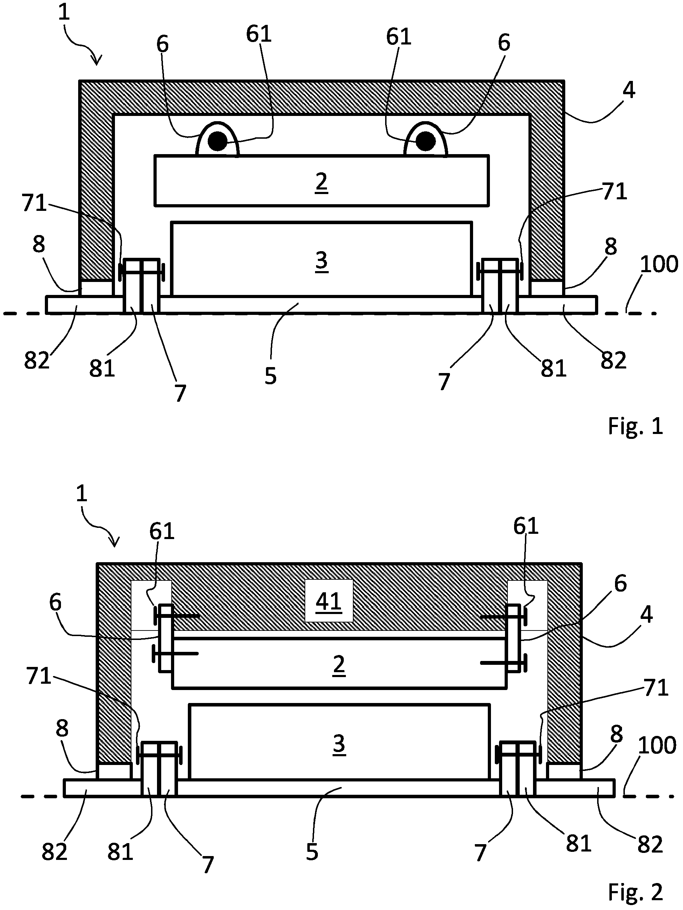

Fig. 1 zeigt eine Ausführungsform einer erfindungsgemäßen elektrischen Maschine 1. Die elektrische Maschine 1 umfasst einen Stator 2, einen Rotor 3, ein Gehäuse 4 und eine Welle 5 des Rotors 3. Erfindungsgemäß ist eine Momentenabstützung 6 aus elektrisch isolierendem Material vorgesehen, welche den Stator 2 mechanisch mit dem Gehäuse 4 verbindet, in der gezeigten Ausführungsform, ohne die Erfindung darauf zu beschränken, durch eine Schraubverbindung 61. Hierdurch wird eine mechanische Fixierung des Stators 2 gegenüber dem Gehäuse 4 erzielt, ohne dass dabei eine elektrisch leitende Verbindung zwischen Stator 2 und Gehäuse 4 gegeben ist.

Ferner weist die Welle 5, welche den Rotor 3 trägt, an beiden Enden jeweils einen Flansch 7 aus elektrisch isolierendem Material auf. Jeder Flansch 7 ist jeweils mit einem Flansch 81 mechanisch verbunden, etwa, und ohne die Erfindung darauf zu beschränken, über eine Schraubverbindung 71. Jeder Flansch 81 wiederum ist mit einer Lagerwelle 82 verbunden. Jede Lagerwelle 82 ist in einem Lager 8 aufgenommen, welches im Gehäuse 4 vorgesehen ist. Somit ist letztlich die Welle 5, und damit der Rotor 3, mechanisch in dem Gehäuse 4 gelagert, ohne dass eine elektrisch leitende Verbindung zwischen Rotor 3 und Gehäuse 4 entlang der Welle 5 besteht.

Gezeigt ist ferner noch eine Drehachse 100 für die elektrische Maschine 1, um die sich die Welle 5 und der Rotor 3 bei Betrieb der elektrischen Maschine 1 drehen. Nur der Vollständigkeit halber wird erwähnt, dass die Figur 1 eine Schnittansicht durch die elektrische Maschine 1 zeigt, bei der nur ein Teil der elektrischen Maschine 1 auf einer Seite der Drehachse 100 dargestellt ist.

Fig. 2 zeigt eine weitere Ausführungsform einer erfindungsgemäßen elektrischen Maschine 1. Die gezeigten Elemente wurden weitestgehend bereits im Kontext der Figur 1 erläutert. Der Unterschied der hier gezeigten Ausführungsform zu der in Figur 1 gezeigten Ausführungsform besteht in der Ausgestaltung der Momentenabstützung 6 aus elektrisch isolierendem Material. Die Momentenabstützung 6 ist hier stirnseitig an einem Vorsprung 41 des Gehäuses 4 angebracht. Auch in dieser Ausgestaltung ist eine mechanische Fixierung des Stators 2 gegenüber dem Gehäuse 4 erzielt, ohne dass dabei eine elektrisch leitende Verbindung zwischen Stator 2 und Gehäuse 4 gegeben ist.

Die Momentenabstützung 6 ist hier mit Stator 2 und Vorsprung 41 durch Schraubverbindungen 61 verbunden, ohne dass die Erfindung darauf beschränkt ist.

### Bezugszeichenliste

- 1: elektrische Maschine
- 2: Stator
- 3: Rotor
- 4: Gehäuse
- 5: Welle
- 6: Momentenabstützung
- 7: Flansch
- 8: Lager
- 41: Vorsprung
- 61: Schraubverbindung
- 71: Schraubverbindung
- 81: Flansch
- 82: Lagerwelle
- 100: Drehachse

## Patentansprüche

1. Elektrische Maschine (1) mit einem Stator (2) und einem Gehäuse (4) aufweisend
eine elektrisch isolierende Momentenabstützung (6), welche den Stator (2) mit dem Gehäuse (4) mechanisch verbindet,
dadurch gekenzeichnet, dass
eine Welle (5) eines Rotors (3) der elektrischen Maschine (1) einen Flansch (7) aus elektrisch isolierendem Material aufweist, wobei
der Flansch (7) der Welle (5) mit einem Flansch (81) einer Lagerwelle (82) verbunden ist, und die Lagerwelle (82) in einem in dem Gehäuse (4) angeordneten Lager (8) aufgenommen ist.

2. Elektrische Maschine (1) nach Anspruch 1, wobei die Welle (5) an gegenüberliegenden Enden jeweils einen Flansch (7) aus elektrisch isolierendem Material aufweist.

## Claims

1. An electrical machine (1) having a stator (2) and a housing (4), having
an electrically insulating torque support (6), which mechanically connects the stator (2) to the housing (4),
**characterised in that**
a shaft (5) of a rotor (3) of the electrical machine (1) has a flange (7) made of electrically insulating material, wherein
the flange (7) of the shaft (5) is connected to a flange (81) of a bearing shaft (82), and the bearing shaft (82) is received in a bearing (8) arranged in the housing (4).

2. The electrical machine (1) according to claim 1, wherein the shaft (5) has a flange (7) each made of electrically insulating material at opposite ends.

## Revendications

1. Machine électrique (1) comportant un stator (2) et un boîtier (4), présentant
un support de couple électriquement isolant (6), qui relie mécaniquement le stator (2) au boîtier (4),
**caractérisée en ce que**
un arbre (5) d'un rotor (3) de la machine électrique (1) présente une bride (7) en matériau électriquement isolant, dans laquelle
la bride (7) de l'arbre (5) est reliée à une bride (81) d'un arbre de palier (82), et l'arbre de palier (82) est reçu dans un palier (8) agencé dans le boîtier (4).

2. Machine électrique (1) selon la revendication 1, dans laquelle l'arbre (5) présente respectivement une bride (7) en matériau électriquement isolant au niveau d'extrémités opposées.
